# EUROPEAN PATENT SPECIFICATION

(11) **EP 2 590 307 B1**
(45) Date of publication and mention of the grant of the patent: **08.03.2017**
(21) Application number: 12765432.5
(22) Date of filing: 12.03.2012
(51) Int. Cl.: H02M 3/335, H02M 1/38

(54) **POWER SUPPLY DEVICE AND METHOD FOR REGULATING DEAD TIME**
STROMVERSORGUNG UND TOTZEITREGELUNGSVERFAHREN DAFÜR
DISPOSITIF D'ALIMENTATION EN ÉNERGIE ÉLECTRIQUE ET PROCÉDÉ POUR RÉGULER LE TEMPS MORT

(30) Priority: 29.03.2011 CN 201110077249
(43) Date of publication of application: 08.05.2013
(73) Proprietor: Huawei Technologies Co., Ltd., Longgang District Shenzhen, Guangdong 518129 (CN)
(72) Inventor: LIU, Xujun, Guangdong 518129 (CN); MAO, Hengchun, Guangdong 518129 (CN); ZHOU, Tao, Guangdong 518129 (CN); HOU, Zhaozheng, Guangdong 518129 (CN); FU, Dianbo, Guangdong 518129 (CN)
(74) Representative: Goddar, Heinz J.
(86) International application number: PCT/CN2012/072207
(87) International publication number: WO 2012/130033

(56) References cited:
- CN-A- 101 242 143
- CN-A- 101 453 165
- CN-A- 101 552 560
- CN-A- 101 951 177
- JP-A- 2002 136 127
- US-A- 6 130 824
- US-A1- 2006 007 713
- US-A1- 2007 097 714
- US-A1- 2008 130 322
- V. YOUSEFZADEH ET AL: "Sensorless Optimization of Dead Times in DC-DC Converters With Synchronous Rectifiers", IEEE TRANSACTIONS ON POWER ELECTRONICS, vol. 21, no. 4, 1 July 2006 (2006-07-01), pages 994-1002, XP055145247, ISSN: 0885-8993, DOI: 10.1109/TPEL.2006.876850

## Description

### FIELD OF THE INVENTION

The present invention relates to power supply technologies, and in particular, to a power supply device and a method for regulating dead time.

### BACKGROUND OF THE INVENTION

As the environmental awareness increases, requirements of people for energy efficiency of electric appliances are higher and higher, and accordingly, requirements for conversion efficiency of a power supply converter are also higher and higher. The loss of the power supply converter is mainly distributed in a magnetic element and a switching tube. The loss of the switching tube is classified into switching loss and conduction loss. The switching loss is not only related to a switching tube itself, but also related to control of a control circuit. In an isolation power supply converter, the dead time between a primary switching tube and a secondary synchronous rectification switching tube has great influence on the efficiency. When a load is light, large dead time is needed, and when the load is heavy, small dead time is needed. When an input voltage is high, large dead time is needed, and when the input voltage is low, small dead time is needed. In the prior art, a load current is directly detected at the secondary side through a digital technology and a secondary-side control technology, and the dead time is regulated by software. However, complex computation and a very slow speed in the prior art cannot satisfy an application scenario of a dynamic load and conversion efficiency is poor.

US 2008/0130322 A1 discloses a power system having a power converter with an adaptive controller. The power system is coupled to a load and includes a power system controller that receives a signal indicating a system operational state of the load and selects a power converter operational state as a function thereof. The power system also includes a power converter with a power switch that conducts for a duty cycle to provide a regulated output characteristic at an output thereof. The power converter also includes a controller that receives a command from the power system controller to enter the power converter operational state and provides a signal to control the duty cycle of the power switch as a function of the output characteristic and in accordance with the command, thereby regulating an internal operating characteristic of the power converter to improve an operating efficiency thereof as a function of the system operational state.

### SUMMARY OF THE INVENTION

Embodiments of the present invention provide a power supply device and a method for regulating dead time, which are used to solve a problem of slow implementation in the prior art and to improve conversion efficiency.

An embodiment of the present invention provides a power supply device, according to claim 1.

An embodiment of the present invention provides a method for regulating dead time, according to claim 8.

It can be learned from the above technical solutions that, in the embodiments of the present invention, by considering the value of the input voltage and that of the sampled current, dead time regulation is performed according to the foregoing two parameters, thereby lowering the complexity and improving the conversion efficiency.

### BRIEF DESCRIPTION OF THE DRAWINGS

To describe the technical solutions in the embodiments of the present invention more clearly, the following briefly introduces the accompanying drawings for describing the embodiments. Apparently, the accompanying drawings in the following description show some embodiments of the present invention, and persons of ordinary skill in the art may still derive other drawings from these accompanying drawings without creative efforts.
FIG. 1 is a schematic structural diagram of a power supply device according to a first embodiment of the present invention;
FIG. 2 is a schematic structural diagram of a reference voltage generating unit in an embodiment of the present invention;
FIG. 3 is a schematic structural diagram of a power supply device according to a second embodiment of the present invention;
FIG. 4 is a schematic structural diagram of a power supply device according to a third embodiment of the present invention;
FIG. 5 is a schematic structural diagram of a signal processing unit in an embodiment of the present invention;
FIG. 6 is a schematic flow chart diagram of a method according to a fourth embodiment of the present invention; and
FIG. 7 is a schematic diagram of a flow chart of generating a reference voltage by a reference voltage generating unit in an embodiment of the present invention.

### DETAILED DESCRIPTION OF THE EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

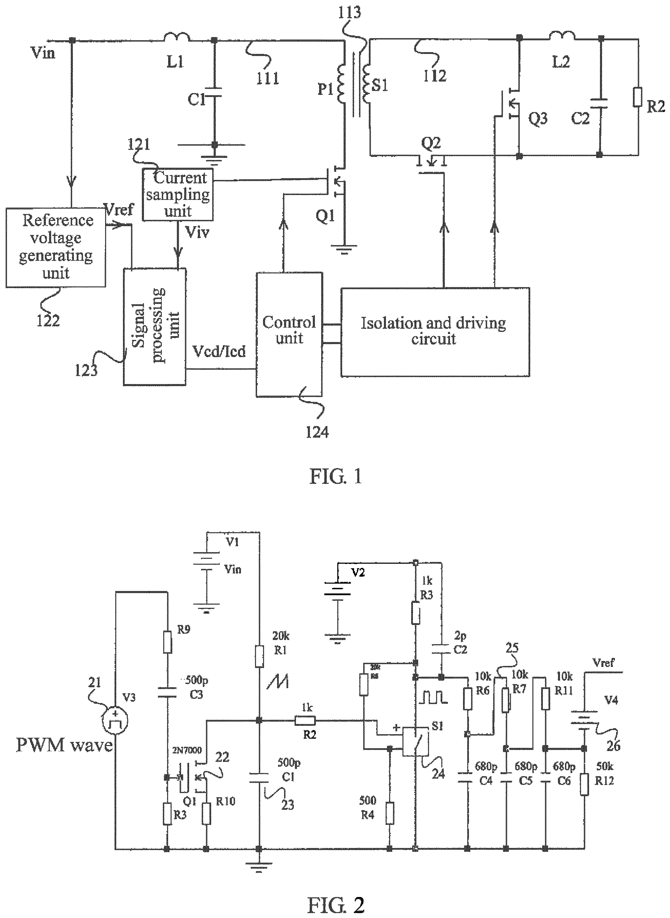

FIG. 1 is a schematic structural diagram of a power supply device according to a first embodiment of the present invention, and the power supply device includes a power supply converter and a regulator. The power supply converter includes a primary-side metal-oxide-semiconductor field-effect transistor (Metal-Oxide-Semiconductor Field-Effect Transistor, MOSFET) 111, a secondary-side mosfet 112 and a transformer 113, where the primary-side mosfet is connected to a primary winding of the transformer, and the secondary-side mosfet is connected to a secondary winding of the transformer.

The regulator includes a current sampling unit 121, a reference voltage generating unit 122, a signal processing unit 123 and a control unit 124. The current sampling unit 121 is configured to sample a current of a primary side of the power supply converter, and generate a voltage Viv used to characterize value of the sampled current; the reference voltage generating unit 122 is configured to generate a reference voltage Vref, where the reference voltage is a constant value or is in inverse proportion to an input voltage Vin of the primary side of the power supply converter; the signal processing unit 123 is configured to, according to the voltage Viv and the reference voltage, generate a dead-time parameter used to characterize dead time, where the dead-time parameter may be a voltage value Vcd or a current value Icd; the control unit 124 is configured to regulate the dead time according to the dead-time parameter, so that the dead time is in inverse proportion to the sampled current, and the dead time is in direct proportion to the input voltage, and configured to, according to the regulated dead time, perform switching control on a primary-side mosfet (Q1) in the power supply converter, or on a primary-side mosfet (Q1) and a secondary-side mosfet (Q2) in the power supply converter. For example, the control unit 124 is specifically configured to control time in which primary-side mosfets in the power supply converter are simultaneously in a switch-off status as the regulated dead time, or control time in which the primary-side mosfet and the secondary-side mosfet in the power supply converter are simultaneously in a switch-off status as the regulated dead time.

That the dead time is in inverse proportion to the sampled current, and the dead time is in direct proportion to the input voltage specifically includes: when the sampled current increases, the regulated dead time decreases, and when the sampled current decreases, the regulated dead time increases; when the input voltage increases, the regulated dead time increases, and when the input voltage decreases, the regulated dead time decreases.

Further, in order to implement high-speed control, the current sampling unit 121, the reference voltage generating unit 122, the signal processing unit 123 and the control unit 124 may be all hardware.

In addition, in order to implement isolation between a primary side and a secondary side, an isolation and driving circuit is added between the primary side and the secondary side.

FIG. 2 is a schematic structural diagram of a reference voltage generating unit in an embodiment of the present invention. Referring to FIG. 2, the reference voltage generating unit includes a pulse width modulation (Pulse Width Modulation, PWM) chip 21, a mosfet 22, a capacitor 23, a comparator 24, and a filter 25; the PWM chip 21 is configured to generate a first PWM wave, where the first PWM wave may be configured according to actual requirements; the mosfet 22 is configured to discharge the capacitor according to the first PWM wave; the capacitor 23 is configured to get charged by the input voltage of the primary side of the power supply converter and get discharged by the mosfet to generate a sawtooth wave; the comparator 24 is configured to compare the sawtooth wave with a predetermined voltage to generate a second PWM wave, where the duty cycle of the second PWM wave is in inverse proportion to the duty cycle of the input voltage; the filter 25 is configured to filter the second PWM wave to generate a direct current voltage which is in inverse proportion to the input voltage. Then, the direct current voltage can be taken as the reference voltage. Or, a trimmer 26 is further included, where the trimmer 26 is configured to perform trimming on the direct current voltage to generate the reference voltage.

Specifically, Vin charges C1 via R1, and Q1 discharges C1, so the charging and discharging form the sawtooth wave in the capacitor C1. A switching control signal of Q1 is from the PWM chip. S1 is a comparator, which receives the sawtooth wave and compares the sawtooth wave with a given voltage to generate a new PWM wave, and the duty cycle is in inverse proportion to the input voltage Vin. The new PWM wave is filtered through R6, C4, R7, C5, R11 and C6 to form the direct current voltage which is in inverse proportion to the input voltage Vin, and then the reference voltage Vref is formed by adding V4 to the direct current voltage. V4 is used to perform trimming on the Vref, so as to satisfy different application scenarios. Deviation caused during the filtering can be compensated through trimming according to a value range used in a practical application, so that comparison can be performed for the Viv.

In addition, this embodiment takes that the reference voltage is in inverse proportion to the input voltage as an example, and the reference voltage can also be taken as a constant value (this value is not limited). In this case, the parameter Vcd or Icd that controls dead time regulation is not only related to the reference voltage, but also related to the voltage characterizing the value of the sampled current, and the value of the sampled current is related to a load, so the dead time can be regulated according to the load, thereby implementing that the dead time is large when the load is light and the dead time is small when the load is heavy, so as to satisfy certain scenario requirements.

In this embodiment, the current sampling and the PWM chip are both at the primary side, and therefore the control is simpler and more convenient; the reference voltage changes as the input voltage changes, and the sampled current is related to the load and the input voltage; therefore, the dead time can be regulated with the change of the input voltage and/or the load.

In a specific embodiment, current sampling can be performed in different manners, for example, the current sampling unit is specifically configured to sample the current of the input bus of the primary side of the power supply converter, and obtain the voltage characterizing the value of the sampled current. Or, the current sampling unit includes: a sampling module, configured to sample a current from the primary-side mosfet and obtain a corresponding voltage according to the sampled current; and a filtering module, configured to obtain the voltage characterizing the value of the sampled current, according to the voltage corresponding to the sampled current. Respective descriptions are made in the following.

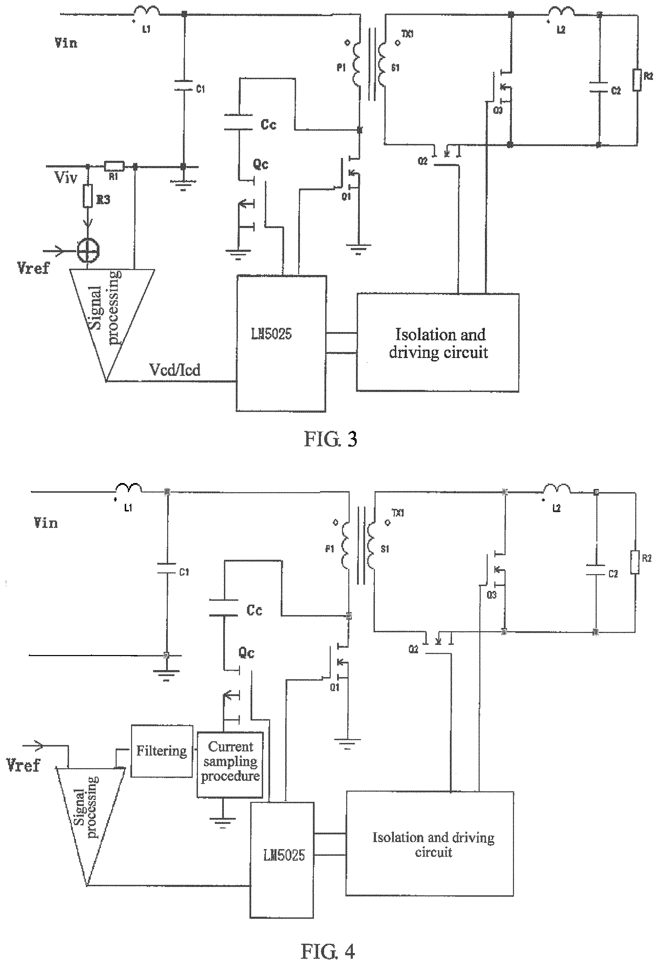

FIG. 3 is a schematic structural diagram of a power supply device according to a second embodiment of the present invention. Referring to FIG. 3, the power supply device can be applied in an active clamp forward converter. As a current sampling unit, R1 samples a current of an input bus, to obtain a voltage Viv characterizing value of the sampled current. A signal processing unit receives a reference voltage Vref and the voltage Viv characterizing the value of the sampled current, generates a dead-time parameter Vcd or Icd through processing and outputs the dead-time parameter to an LM5025. The LM5025 regulates dead time between two primary-side mosfets to a required value according to the dead-time parameter Vcd or Icd, for example, regulates dead time between the two mosfets, Q1 and Qc; and/or, regulates dead time between a primary-side mosfet and a secondary-side mosfet to a required value, for example, regulates dead time between the two mosfets, Q1 and Q2. When an input voltage increases, the Vref decreases, and the signal output by a signal processing procedure also changes. After receiving a new deadtime signal, the LM5025 regulates dead time between mosfets to a larger value, so as to decrease a surge current during conduction and make a voltage spike during conduction of a mosfet smaller, so that switching loss is lowered and efficiency is improved. When a load is heavy, the sampled current increases, and one signal is output by the signal processing procedure. This signal may enable the LM5025 to decrease the dead time. In this way, conduction time of a synchronous rectification mosfet diode is shortened, the loss is decreased and the efficiency is improved.

In specific implementation, whether the signal processing unit outputs Vcd or outputs Icd may be determined according to actual situations. For example, if a device regulating the dead time subsequently needs voltage input, the signal processing unit may output Vcd; if the device regulating the dead time subsequently needs current input, the signal processing unit may output Icd. Vcd and Icd may be converted through a resistor.

FIG. 4 is a schematic structural diagram of a power supply device according to a third embodiment of the present invention. Referring to FIG. 4, FIG. 4 is another form in which the power supply device is applied in an active clamp forward converter. The current sampling is different from that shown in FIG. 3. In this case, a current in a primary-side mosfet is directly sampled, and the current obtained through the sampling is a pulse current. Therefore, one filtering procedure is added to filer the pulse current to a mean value. When a signal of this mean value becomes stronger, the LM5025 diminishes a deadtime; otherwise, the LM5025 enlarges the deadtime.

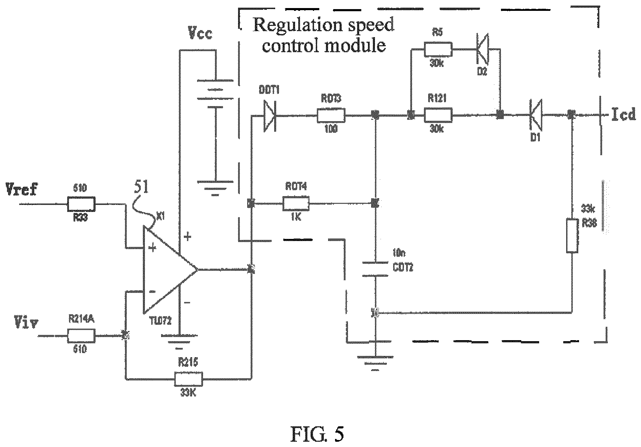

FIG. 5 is a schematic structural diagram of a signal processing unit in an embodiment of the present invention, and the signal processing unit includes an operational amplifier 51, where the operational amplifier 51 is configured to amplify a sum of or a difference between a voltage characterizing value of a sampled current and a reference voltage to obtain a dead-time parameter, and an absolute value of an amplification factor adopted in the amplification processing may be greater than, equal to or less than 1, so that when dead time is regulated according to the dead-time parameter, the dead time is in inverse proportion to the sampled current and the dead time is in direct proportion to an input voltage. In a specific embodiment, the operational amplifier may be replaced with an adder and an amplifier, where the adder is configured to obtain the sum of the voltage characterizing the value of the sampled current and the reference voltage, or obtain the difference between the sampling voltage and the reference voltage; the adder may be a simple resistor network or a dedicated adding circuit. The amplifier is configured to amplify a voltage signal obtained after processing of the adder to obtain the dead-time parameter, an absolute value of an amplification factor adopted in the amplification processing may be greater than, equal to or less than 1, so that when the dead time is regulated according to the dead-time parameter, the dead time is in inverse proportion to the sampled current, and the dead-zone time is in direct proportion to the input voltage.

In addition, the specific manner of regulating the dead time according to each parameter during the foregoing regulation procedure is not limited, as long as it is ensured that, when the sampled current increases, the dead time is decreased, and when the sampled current decreases, the dead time is increased; and/or, when the input voltage increases, the dead time is increased, and when the input voltage decreases, the dead time is decreased. For example, if the signal processing unit shown in FIG. 5 is adopted, the voltage characterizing the value of the sampled current is taken as a negative input end of the operational amplifier, and the reference voltage is taken as a positive input end of the operational amplifier. If Vcd is output, when Vcd becomes larger, the dead time needs to be controlled to decrease. Then, the mosfet required to be controlled is kept in a switch-off status in the regulated dead time. In addition, the changed value is not limited and can be set according to actual requirements. For example, the sampled current increases by value A, the dead time is decreased by B, and A and B can be set according to actual requirements.

In addition, in order to regulate the dead time more efficiently, a regulation speed may be controlled. That is, this embodiment may further include a regulation speed control module, configured to increase a generating speed of the dead-time parameter when the dead time increases or the load decreases, and decrease the generating speed of the dead-time parameter when the dead time decreases or the load increases. Therefore, after the regulation speed control module is adopted, if the dead time increases or the load decreases, because the generating speed of the deadtime parameter increases, the regulation speed of the dead time may be increased; if the dead time decreases or the load increases, because the generating speed of the dead-time parameter decreases, the regulation speed of the dead time may be decreased.

Specifically, referring to FIG. 5, the reference voltage Vref and the voltage Viv characterizing the value of the sampled current are added to a non-inverting input end and an inverting input end of the operational amplifier, respectively. After being processed by the operational amplifier, the reference voltage Vref and the voltage Viv are converted by the regulation speed control module into a current signal Icd characterizing the dead time. The PWM chip may control a MOSFET switch according to the current signal. The dead time regulation speed control module can be divided into two parts:
1) A first part is formed by DDT1, RDT3, RDT4 and CDT2. The first part can increase the speed when the dead time increases, and decrease the speed when the dead time decreases. Specifically, when the dead time increases, a voltage output by the operational amplifier increases, and there are two branches to charge the capacitor CDT2: one is RDT4 and the other is DDT1 and RDT3, so the speed of charging is quick; when the dead time decreases, the voltage output by the operational amplifier decreases, there is only one branch, RDT4, to charge the capacitor, and the other branch is obstructed due to inverse cut-off of the diode DDT1, so the speed of discharging becomes slower, and the regulation speed also becomes slower when the dead time decreases.
2) A second part is formed by R5, D2, R121, D1 and R38. This part may be equivalent to a variable resistor whose resistance changes as the voltage between the two ends of CDT2 changes. When the sampled current is small, the voltage output by the operational amplifier is high, the voltage between the two ends of the CDT2 is high, the equivalent resistance becomes larger quickly as the sampled current decreases, the Icd becomes smaller quickly and the dead time becomes larger quickly.

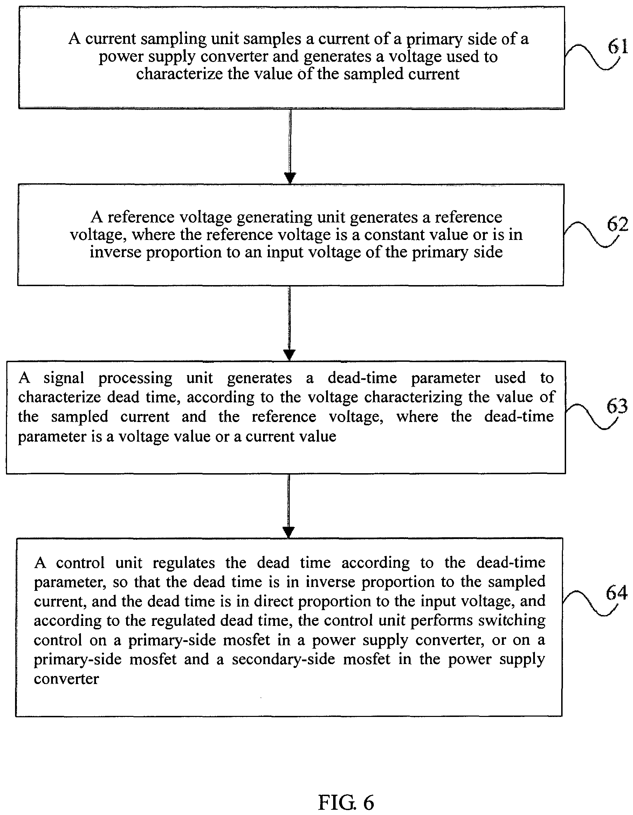

FIG. 6 is a schematic flow chart of a method according to a fourth embodiment of the present invention, and the method includes the following:
Step 61: A current sampling unit samples a current of a primary side of a power supply converter and generates a voltage used to characterize value of the sampled current.

It may be that a current of an input bus of the primary side is sampled by using a resistor connected in series to the primary side, and obtains the voltage characterizing the value of the sampled current.

It may also be that, a sampling module samples a current from a primary-side mosfet and obtains a corresponding voltage according to the sampled current; a filtering module filters the voltage corresponding to the sampled current to obtain the voltage characterizing the value of the sampled current.

Step 62: A reference voltage generating unit generates a reference voltage, where the reference voltage is a constant value or is in inverse proportion to an input voltage of the primary side.

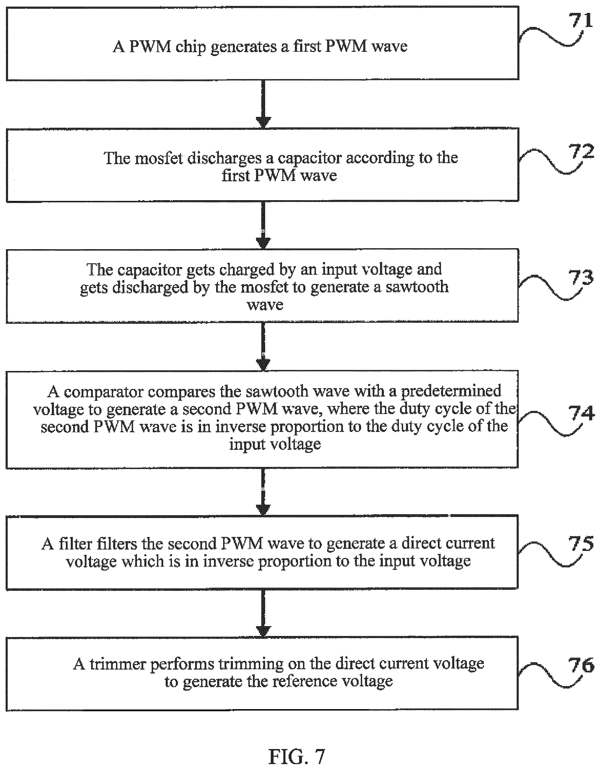

FIG. 7 is a schematic diagram of a flow chart of generating a reference voltage by a reference voltage generating unit in an embodiment of the present invention, which includes the following steps:
Step 71: A PWM chip generates a first PWM wave.
Step 72: A mosfet discharges a capacitor according to the first PWM wave.
Step 73: The capacitor gets charged by an input voltage and gets discharged by the mosfet, to generate a sawtooth wave.
Step 74: A comparator compares the sawtooth wave with a predetermined voltage to generate a second PWM wave, where the duty cycle of the second PWM wave is in inverse proportion to the duty cycle of the input voltage.
Step 75: A filter filters the second PWM wave to generate a direct current voltage which is in inverse proportion to the input voltage; then, the direct current voltage may be taken as a reference voltage. Or, the following steps are further included.
Step 76: A trimmer performs trimming on the direct current voltage to generate the reference voltage, where a value of the trimming may be set according to actual requirements.
Step 63: A signal processing unit generates a dead-time parameter used to characterize dead time, according to the voltage characterizing the value of the sampled current and the reference voltage, where the dead-time parameter is a voltage value or a current value.

It may be that, an adder is adopted to obtain a sum of the voltage characterizing the value of the sampled current and the reference voltage, or to obtain a difference between the voltage characterizing the value of the sampled current and the reference voltage; an amplifier is adopted to amplify the voltage signal obtained after processing of the adder to obtain the dead-time parameter, where an absolute value of an amplification factor adopted in the amplification processing is greater than, equal to or less than 1, so that when the dead time is regulated according to the dead-time parameter, the dead time is in inverse proportion to the sampled current, and the dead time is in direct proportion to the input voltage; or, an operational amplifier is adopted to amplify a voltage value, which is the sum of or the difference between the voltage characterizing the value of the sampled current and the reference voltage, to obtain the amplified voltage value, and the amplified value is taken as the dead-time parameter, an absolute value of a corresponding amplification factor is greater than, equal to or less than 1, so that when the dead time is regulated according to the dead-time parameter, the dead time is in inverse proportion to the sampled current and the dead time is in direct proportion to the input voltage.

Besides, when the dead-time parameter is generated, it may be that the generating speed of the dead-time parameter is increased when the dead time increases or a load decreases; the generating speed of the dead-time parameter is decreased when the dead time decreases or the load increases.

Step 64: A control unit regulates the dead time according to the dead-time parameter, so that the dead time is in inverse proportion to the sampled current, and the dead time is in direct proportion to the input voltage; and according to the regulated dead time, the control unit performs switching control on a primary-side mosfet in a power supply converter, or on a primary-side mosfet and a secondary-side mosfet in the power supply converter.

When the sampled current increases, the regulated dead time decreases, and when the sampled current decreases, the regulated dead time increases; when the input voltage increases, the regulated dead time increases, and when the input voltage decreases, the regulated dead time decreases. In addition, performing switching control on the primary-side mosfet in the power supply converter, or on the primary-side mosfet and the secondary-side mosfet in the power supply converter according to the regulated dead time may include: controlling time in which primary-side mosfets in the power supply converter are simultaneously in a switch-off status as the regulated dead time, or controlling time in which the primary-side mosfet and the secondary-side mosfet in the power supply converter are simultaneously in a switch-off status as the regulated dead time.

The current sampling unit, the reference voltage generating unit, the signal processing unit and the control unit may be all hardware.

In this embodiment, the hardware regulates the dead time, which may lower the complexity and increase a regulation speed.

It should be understood that, reference may be made between related features in the foregoing method and related features in the foregoing device. In addition, "first" and "second" in the foregoing embodiments are used to distinguish embodiments, but do not represent superiority or inferiority of the embodiments.

Persons of ordinary skill in the art may understand that all or a part of the steps in each of the foregoing method embodiments may be implemented by a program instructing relevant hardware.

Finally, it should be noted that the foregoing embodiments are merely used to describe the technical solutions of the present invention other than limiting the present invention. Although the present invention is described in detail with reference to the foregoing embodiments, persons of ordinary skill in the art should understand that modifications can be still made to the technical solutions described in the foregoing embodiments or equivalent replacements can be made to some technical features thereof, and such modifications or replacements cannot make the essence of the corresponding technical solutions depart from the idea and scope of the technical solutions of the embodiments of the present invention.

## Claims

1. A power supply device, comprising a power supply converter and a regulator, wherein the power supply converter comprises a first primary-side metal-oxide-semiconductor field-effect transistor (mosfet, Q1), a secondary-side mosfet (Q2) and a transformer (113), the first primary-side mosfet (Q1) is connected to a primary winding of the transformer (113), the secondary-side mosfet (Q2) is connected to a secondary winding of the transformer (113), and the regulator comprises:
a current sampling unit (121), configured to sample a current of a primary side of the power supply converter;
and
a control unit (124), configured to regulate a dead time according to a dead-time parameter, so that the dead time is in inverse proportion to the sampled current, and the dead time is in direct proportion to an input voltage, on the primary side and configured to, according to the regulated dead time, perform switching control on primary-side mosfets (Q1) in the power supply converter in the case that the power supply converter further comprises a second primary-side mosfet Qc, or perform switching control on the primary-side mosfet (Q1) and the secondary-side mosfet (Q2) in the power supply converter;
wherein the control unit (124) is specifically configured to:
control time in which primary-side mosfets (Q1) in the power supply converter are simultaneously in a switch-off status as the regulated dead time in the case that the power supply converter further comprises the second primary-side mosfet Qc, or control time in which the first primary-side mosfet (Q1) and the secondary-side mosfet (Q2) in the power supply converter are simultaneously in a switch-off status as the regulated dead time.

2. The device according to claim 1, wherein the current sampling unit (121) is further configured to generate a voltage used to characterize value of the sampled current;
the regulator further comprises a reference voltage generating unit (122), configured to generate a reference voltage, wherein the reference voltage is a constant value or is in inverse proportion to the input voltage of the primary side; and a signal processing unit (123), configured to generate the dead-time parameter used to characterize dead time, according to the voltage characterizing the value of the sampled current and the reference voltage, wherein the dead-time parameter is a voltage value or a current value;
wherein when the reference voltage is in inverse proportion to the input voltage, the reference voltage generating unit (122) comprises:
a PWM chip (21), a mosfet (22), a capacitor (23), a comparator (24) and a filter (25); wherein
the PWM chip (21) is configured to generate a first PWM wave;
the mosfet (22) is configured to discharge the capacitor (23) according to the first PWM wave;
the capacitor (23) is configured to get charged by the input voltage and get discharged by the mosfet (22), to generate a sawtooth wave;
the comparator (24) is configured to compare the sawtooth wave with a predetermined voltage to generate a second PWM wave, wherein duty cycle of the second PWM wave is in inverse proportion to duty cycle of the input voltage; and
the filter (25) is configured to filter the second PWM wave, to generate a direct current voltage which is in inverse proportion to the input voltage, so as to generate the reference voltage according to the direct current voltage.

3. The device according to claim 2, wherein,
the direct current voltage which is generated by the filter (25) and is in inverse proportion to the input voltage is taken as the reference voltage; or,
the reference voltage generating unit (122) further comprises: a trimmer (26), configured to perform trimming on the direct current voltage generated by the filter (25) to generate the reference voltage.

4. The device according to any one of claims 1 to 3, wherein the current sampling unit (121) is specifically configured to sample a current of an input bus of the primary side, to obtain the voltage characterizing the value of the sampled current.

5. The device according to any one of claims 1 to 3, wherein, the current sampling unit (121) comprises:
a sampling module, configured to sample a current from the first primary-side mosfet (Q1) and obtain a corresponding voltage according to the sampled current; and
a filtering module, configured to filer the voltage corresponding to the sampled current to obtain the voltage characterizing the value of the sampled current.

6. The device according to claim 1, wherein the signal processing unit (123) comprises:
an adder, configured to obtain a sum of the voltage characterizing the value of the sampled current and the reference voltage, or obtain a difference between the voltage characterizing the value of the sampled current and the reference voltage; and an amplifier, configured to amplify a voltage signal obtained after processing of the adder to obtain the dead-time parameter, so that when the dead time is regulated according to the dead-time parameter, the dead time is in inverse proportion to the sampled current, and the dead time is in the same direct proportion to the input voltage;
or,
an operational amplifier (51), configured to amplify a voltage value, which is a sum of or a difference between the voltage characterizing the value of the sampled current and the reference voltage, to obtain the amplified voltage value, wherein the amplified value is taken as the dead-time parameter, so that when the dead time is regulated according to the dead-time parameter, the dead time is in inverse proportion to the sampled current, and the dead time is in direct proportion to the input voltage.

7. The device according to claim 6, wherein the signal processing unit further (123) comprises:
a regulation speed control module, configured to increase a generating speed of the dead-time parameter when the dead time increases or a load decreases, and decrease the generating speed of the dead-time parameter when the dead time decreases or the load increases.

8. A method for regulating dead-time, comprising:
sampling a current of a primary side of a power supply converter;
and
regulating a dead time according to a dead-time parameter, so that the dead time is in inverse proportion to the sampled current, and the dead time is in direct proportion to an input voltage, on the primary side and according to the regulated dead time, performing switching control on primary-side mosfets in the power supply converter, or on a primary-side mosfet and a secondary-side mosfet in the power supply converter;
wherein the performing switching control on primary-side mosfets in the power supply converter, or on the primary-side mosfet and the secondary-side mosfet in the power supply converter according to the regulated dead time comprises:
controlling time in which primary-side mosfets in the power supply converter are simultaneously in a switch-off status as the regulated dead time, or controlling time in which the first mosfet and the secondary-side mosfet in the power supply converter are simultaneously in a switch-off status as the regulated dead time.

9. The method according to claim 8, wherein the method further comprises generating a voltage used to characterize value of the sampled current;
generating a reference voltage, wherein the reference voltage is a constant value or is in inverse proportion to the input voltage of the primary side; and generating a dead-time parameter used to characterize dead time, according to the voltage characterizing the value of the sampled current and the reference voltage, wherein the dead-time parameter is a voltage value or a current value;
and wherein when the reference voltage is in inverse proportion to the input voltage, the generating a reference voltage comprises:
generating a first PWM wave;
discharging a capacitor according to the first PWM wave;
getting charged by the input voltage and getting discharged by the mosfet to generate a sawtooth wave;
comparing the triangular wave with a predetermined voltage to generate a second PWM wave, wherein duty cycle of the second PWM wave is in inverse proportion to duty cycle of the input voltage; and
filtering the second PWM wave, to generate a direct current voltage which is in inverse proportion to the input voltage, so as to generate the reference voltage according to the direct current voltage.

10. The method according to claim 9, wherein, the generating the reference voltage according to the direct current voltage comprises:
taking the direct current voltage as the reference voltage;
or,
performing trimming on the direct current voltage to generate the reference voltage.

11. The method according to any one of claims 8 to 10, wherein the sampling a current of a primary side of a power supply converter and generating a voltage used to characterize value of the sampled current comprises:
sampling a current of an input bus of the primary side to obtain the voltage characterizing the value of the sampled current.

12. The method according to any one of claims 8 to 10, wherein the sampling a current of a primary side of a power supply converter and generating a voltage used to characterize value of the sampled current comprises:
sampling a current from the primary-side mosfet and obtaining a corresponding voltage according to the sampled current; and
filtering the voltage corresponding to the sampled current to obtain the voltage characterizing the value of the sampled current.

13. The method according to claim 8, wherein the generating a dead-time parameter used to characterize dead time according to the voltage characterizing the value of the sampled current and the reference voltage comprises:
by using an adder, obtaining a sum of the voltage characterizing the value of the sampled current and the reference voltage or obtaining a difference between the voltage characterizing the value of the sampled current and the reference voltage; and
by using an amplifier, amplifying a voltage signal obtained after processing of the adder to obtain the dead-time parameter, so that when the dead time is regulated according to the dead-time parameter, the dead time is in inverse proportion to the sampled current, and the dead time is in the direct proportion to the input voltage;
or,
by using an operational amplifier, amplifying a voltage value, which is a sum of or a difference between the voltage characterizing the value of the sampled current and the reference voltage, to obtain the amplified voltage value, wherein the amplified value is taken as the dead-time parameter, so that when the dead time is regulated according to the dead-time parameter, the dead time is in inverse proportion to the sampled current, and the dead time is in the direct proportion to the input voltage.

14. The method according to claim 8, wherein the generating a dead-time parameter used to characterize dead time comprises:
increasing a generating speed of the dead-time parameter when the dead time increases or a load decreases, and decreasing the generating speed of the dead-time parameter when the dead time decreases or the load increases.

## Patentansprüche

1. Stromversorgungsvorrichtung, die einen Stromversorgungswandler und einen Regler umfasst, wobei der Stromversorgungswandler einen ersten Primärseiten-MetallOxid-Halbleiter-Feldeffekttransistor (MOSFET, Q1), einen Sekundärseiten-MOSFET (Q2) und einen Transformator (113) umfasst, wobei der erste Primärseiten-MOSFET (Q1) mit einer Primärwicklung des Transformators (113) verbunden ist, der Sekundärseiten-MOSFET (Q2) mit einer Sekundärwicklung des Transformators (113) verbunden ist und der Regler umfasst:
eine Stromabtasteinheit (121), die konfiguriert ist, einen Strom einer Primärseite des Stromversorgungswandlers abzutasten;
und
eine Steuereinheit (124), die konfiguriert ist, eine Totzeit gemäß einem Totzeitparameter zu regeln, so dass die Totzeit umgekehrt proportional zu dem abgetasteten Strom ist und die Totzeit direkt proportional zu einer Eingangsspannung auf der Primärseite ist, und konfiguriert ist, eine Schaltsteuerung der Primärseiten-MOSFETs (Q1) in dem Stromversorgungswandler in dem Fall, dass der Stromversorgungswandler ferner einen zweiten Primärseiten-MOSFET (Qc) umfasst, gemäß der geregelten Totzeit durchzuführen oder eine Schaltsteuerung des Primärseiten-MOSFET (Q1) und des Sekundärseiten-MOSFET (Q2) in dem Stromversorgungswandler durchzuführen;
wobei die Steuereinheit (124) speziell dazu konfiguriert ist:
eine Zeit, in der sich Primärseiten-MOSFETs (Q1) in dem Stromversorgungswandler gleichzeitig in einem ausgeschalteten Zustand befinden, als die geregelte Totzeit in dem Fall, dass der Stromversorgungswandler ferner den zweiten Primärseiten-MOSFET (Qc) umfasst, zu steuern, oder
eine Zeit, in der sich der erste Primärseiten-MOSFET (Q1) und der Sekundärseiten-MOSFET (Q2) in dem Stromversorgungswandler gleichzeitig in einem ausgeschalteten Zustand befinden, als die geregelte Totzeit zu steuern.

2. Vorrichtung nach Anspruch 1, wobei die Stromabtasteinheit (121) ferner konfiguriert ist, eine Spannung zu erzeugen, die zum Charakterisieren eines Wertes des abgetasteten Stroms verwendet wird;
der Regler ferner eine Referenzspannungserzeugungseinheit (122) umfasst, die konfiguriert ist, eine Referenzspannung zu erzeugen, wobei die Referenzspannung einen konstanten Wert aufweist oder umgekehrt proportional zu der Eingangsspannung der Primärseite ist; und eine Signalverarbeitungseinheit (123), die konfiguriert ist, den Totzeitparameter zu erzeugen, der zum Charakterisieren der Totzeit gemäß der Spannung, die den Wert des abgetasteten Stroms charakterisiert, und der Referenzspannung verwendet wird, wobei der Totzeitparameter ein Spannungswert oder ein Stromwert ist:
wobei, wenn die Referenzspannung umgekehrt proportional zu der Eingangsspannung ist, die Referenzspannungserzeugungseinheit (122) umfasst:
einen PWM-Chip (21), einen MOSFET (22), einen Kondensator (23), einen Komparator (24) und ein Filter (25);
wobei
der PWM-Chip (21) konfiguriert ist, eine erste PWM-Welle zu erzeugen;
der MOSFET (22) konfiguriert ist, den Kondensator (23) gemäß der ersten PWM-Welle zu entladen;
der Kondensator (23) konfiguriert ist, von der Eingangsspannung aufgeladen und von dem MOSFET (22) entladen zu werden, so dass eine Sägezahnwelle erzeugt wird; der Komparator (24) konfiguriert ist, die Sägezahnwelle mit einer vorbestimmten Spannung zu vergleichen, um eine zweite PWM-Welle zu erzeugen, wobei ein Tastgrad der zweiten PWM-Welle umgekehrt proportional zu einem Tastgrad der Eingangsspannung ist; und
das Filter (25) konfiguriert ist, die zweite PWM-Welle zu filtern, um eine Gleichstromspannung zu erzeugen, die umgekehrt proportional zu der Eingangsspannung ist, so dass die Referenzspannung gemäß der Gleichstromspannung erzeugt wird.

3. Vorrichtung nach Anspruch 2, wobei
die Gleichstromspannung, die von dem Filter (25) erzeugt wird und die umgekehrt proportional zu der Eingangsspannung ist, als die Referenzspannung benutzt wird; oder
die Referenzspannungserzeugungseinheit (122) ferner umfasst: einen Trimmer (26), der konfiguriert ist, Trimmen der Gleichstromspannung, die von dem Filter (25) erzeugt wird, durchzuführen, um die Referenzspannung zu erzeugen.

4. Vorrichtung nach einem der Ansprüche 1 bis 3, wobei die Stromabtasteinheit (121) speziell dazu konfiguriert ist, einen Strom eines Eingangsbusses der Primärseite abzutasten, um die Spannung zu erhalten, die den Wert des abgetasteten Stroms charakterisiert.

5. Vorrichtung nach einem der Ansprüche 1 bis 3, wobei die Stromabtasteinheit (121) umfasst:
ein Abtastmodul, das konfiguriert ist, einen Strom von dem ersten Primärseiten-MOSFET (Q1) abzutasten und eine entsprechende Spannung gemäß dem abgetasteten Strom zu erhalten; und
ein Filtermodul, das konfiguriert ist, die dem abgetasteten Strom entsprechende Spannung zu filtern, um die Spannung, die den Wert des abgetasteten Stroms charakterisiert, zu erhalten.

6. Vorrichtung nach Anspruch 1, wobei die Signalverarbeitungseinheit (123) umfasst:
einen Addierer, der konfiguriert ist, eine Summe der Spannung, die den Wert des abgetasteten Stroms charakterisiert, und der Referenzspannung zu erhalten oder eine Differenz zwischen der Spannung, die den Wert des abgetasteten Stroms charakterisiert, und der Referenzspannung zu erhalten; und einen Verstärker, der konfiguriert ist, ein Spannungssignal, das nach der Verarbeitung durch den Addierer erhalten wird, zu verstärken, um den Totzeitparameter zu erhalten, so dass, wenn die Totzeit gemäß dem Totzeitparameter geregelt wird, die Totzeit umgekehrt proportional zu dem abgetasteten Strom ist und die Totzeit direkt proportional zu der Eingangsspannung ist;
oder,
einen Operationsverstärker (51), der konfiguriert ist, einen Spannungswert zu verstärken, der eine Summe oder eine Differenz zwischen der Spannung, die den Wert des abgetasteten Stroms charakterisiert, und der Referenzspannung ist, um den verstärkten Spannungswert zu erhalten, wobei der verstärkte Wert als der Totzeitparameter benutzt wird, so dass, wenn die Totzeit gemäß dem Totzeitparameter geregelt wird, die Totzeit umgekehrt proportional zu dem abgetasteten Strom ist und die Totzeit direkt proportional zu der Eingangsspannung ist.

7. Vorrichtung nach Anspruch 6, wobei die Signalverarbeitungseinheit (123) ferner umfasst:
ein Regelgeschwindigkeitssteuermodul, das konfiguriert ist, eine Erzeugungsgeschwindigkeit des Totzeitparameters zu erhöhen, wenn sich die Totzeit erhöht oder sich eine Last verringert, und die Erzeugungsgeschwindigkeit des Totzeitparameters zu verringern, wenn sich die Totzeit verringert oder die Last erhöht.

8. Verfahren zum Regeln einer Totzeit, das umfasst:
Abtasten eines Stroms einer Primärseite eines Stromversorgungswandlers;
und
Regeln einer Totzeit gemäß einem Totzeitparameter, so dass die Totzeit umgekehrt proportional zu dem abgetasteten Strom ist, und die Totzeit direkt proportional zu einer Eingangsspannung auf der Primärseite ist;
und Durchführen einer Schaltsteuerung der Primärseiten-MOSFETs in dem Stromversorgungswandler oder eines Primärseiten-MOSFET und eines Sekundärseiten-MOSFET in dem Stromversorgungswandler gemäß der geregelten Totzeit;
wobei das Durchführen der Schaltsteuerung der Primärseiten-MOSFETs in dem Stromversorgungswandler oder des Primärseiten-MOSFET und des Sekundärseiten-MOSFET in dem Stromversorgungswandler gemäß der geregelten Totzeit umfasst:
Steuern einer Zeit, in der sich Primärseiten-MOSFETs in dem Stromversorgungswandler gleichzeitig in einem ausgeschalteten Zustand befinden, als die geregelte Totzeit oder Steuern einer Zeit, in der sich der erste MOSFET und der Sekundärseiten-MOSFET in dem Stromversorgungswandler gleichzeitig in einem ausgeschalteten Zustand befinden, als die geregelte Totzeit.

9. Verfahren nach Anspruch 8, wobei das Verfahren ferner Erzeugen einer Spannung, die zum Charakterisieren eines Wertes des abgetasteten Stroms verwendet wird, umfasst;
Erzeugen einer Referenzspannung, wobei die Referenzspannung einen konstanten Wert aufweist oder umgekehrt proportional zu der Eingangsspannung der Primärseite ist; und Erzeugen eines Totzeitparameters, der zum Charakterisieren einer Totzeit verwendet wird, gemäß der Spannung, die den Wert des abgetasteten Stroms charakterisiert, und der Referenzspannung, wobei der Totzeitparameter ein Spannungswert oder ein Stromwert ist;
und wobei, wenn die Referenzspannung umgekehrt proportional zu der Eingangsspannung ist, das Erzeugen einer Referenzspannung umfasst:
Erzeugen einer ersten PWM-Welle;
Entladen eines Kondensators gemäß der ersten PWM-Welle;
Aufladen durch die Eingangsspannung und Entladen durch den MOSFET, so dass eine Sägezahnwelle erzeugt wird;
Vergleichen der Dreieckswelle mit einer vorbestimmten Spannung, um eine zweite PWM-Welle zu erzeugen, wobei ein Tastgrad der zweiten PWM-Welle umgekehrt proportional zu einem Tastgrad der Eingangsspannung ist; und
Filtern der zweiten PWM-Welle, um eine Gleichstromspannung zu erzeugen, die umgekehrt proportional zu der Eingangsspannung ist, so dass die Referenzspannung gemäß der Gleichstromspannung erzeugt wird.

10. Verfahren nach Anspruch 9, wobei das Erzeugen der Referenzspannung gemäß der Gleichstromspannung umfasst:
Benutzen der Gleichstromspannung als die Referenzspannung;
oder,
Durchführen von Trimmen der Gleichstromspannung, um die Referenzspannung zu erzeugen.

11. Verfahren nach einem der Ansprüche 8 bis 10, wobei das Abtasten eines Stroms einer Primärseite eines Stromversorgungswandlers und Erzeugen einer Spannung, die zum Charakterisieren eines Wertes des abgetasteten Stroms verwendet wird, umfasst:
Abtasten eines Stroms eines Eingangsbusses der Primärseite, um die Spannung, die den Wert des abgetasteten Stroms charakterisiert, zu erhalten.

12. Verfahren nach einem der Ansprüche 8 bis 10, wobei das Abtasten eines Stroms einer Primärseite eines Stromversorgungswandlers und Erzeugen einer Spannung, die zum Charakterisieren eines Wertes des abgetasteten Stroms verwendet wird, umfasst:
Abtasten eines Stroms von dem Primärseiten-MOSFET und Erhalten einer entsprechenden Spannung gemäß dem abgetasteten Strom; und
Filtern der Spannung, die dem abgetasteten Strom entspricht, um die Spannung, die den Wert des abgetasteten Stroms charakterisiert, zu erhalten.

13. Verfahren nach Anspruch 8, wobei das Erzeugen eines Totzeitparameters, der zum Charakterisieren der Totzeit verwendet wird, gemäß der Spannung, die den Wert des abgetasteten Stroms charakterisiert, und der Referenzspannung umfasst:
Erhalten einer Summe aus der Spannung, die den Wert des abgetasteten Stroms charakterisiert, und der Referenzspannung oder Erhalten einer Differenz zwischen der Spannung, die den Wert des abgetasteten Stroms charakterisiert, und der Referenzspannung durch Verwendung eines Addierers; und Verstärken eines Spannungssignals, das nach der Verarbeitung durch den Addierer erhalten wird, durch Verwendung eines Verstärkers, um den Totzeitparameter zu erhalten, so dass, wenn die Totzeit gemäß dem Totzeitparameter geregelt wird, die Totzeit umgekehrt proportional zu dem abgetasteten Strom ist und die Totzeit direkt proportional zu der Eingangsspannung ist;
oder,
Verstärken eines Spannungswertes, der eine Summe oder eine Differenz zwischen der Spannung,, die den Wert des abgetasteten Stroms charakterisiert, und der Referenzspannung ist, durch Verwendung eines Operationsverstärkers, um den verstärkten Spannungswert zu erhalten, wobei der verstärkte Wert als der Totzeitparameter benutzt wird, so dass, wenn die Totzeit gemäß dem Totzeitparameter geregelt wird, die Totzeit umgekehrt proportional zu dem abgetasteten Strom ist und die Totzeit direkt proportional zu der Eingangsspannung ist.

14. Verfahren nach Anspruch 8, wobei das Erzeugen eines Totzeitparameters, der zum Charakterisieren einer Totzeit verwendet wird, umfasst:
Erhöhen einer Erzeugungszeit des Totzeitparameters, wenn sich die Totzeit erhöht oder sich eine Last verringert, und Verringern der Erzeugungsgeschwindigkeit des Totzeitparameters, wenn sich die Totzeit verringert oder sich die Last erhöht.

## Revendications

1. Dispositif d'alimentation électrique, comprenant un convertisseur d'alimentation électrique et un régulateur, le convertisseur d'alimentation électrique comprenant un premier transistor à effet de champ métal-oxyde-semiconducteur de côté primaire (MOSFET, Q1), un MOSFET de côté secondaire (Q2) et un transformateur (113), le premier MOSFET de côté primaire (Q1) étant relié à un enroulement primaire du transformateur (113), le MOSFET de côté secondaire (Q2) étant relié à un enroulement secondaire du transformateur (113), et le régulateur comprenant :
une unité d'échantillonnage de courant (121), configurée pour échantillonner un courant d'un côté primaire du convertisseur d'alimentation électrique ;
et
une unité de commande (124), configurée pour réguler un temps mort en fonction d'un paramètre de temps mort, afin que le temps mort soit inversement proportionnel au courant échantillonné et que le temps mort soit directement proportionnel à une tension d'entrée, sur le côté primaire, et configurée pour, en fonction du temps mort régulé, effectuer une commande de commutation sur des MOSFET de côté primaire (Q1) du convertisseur d'alimentation électrique au cas où le convertisseur d'alimentation électrique comprend également un deuxième MOSFET de côté primaire Qc, ou effectuer une commande de commutation sur le MOSFET de côté primaire (Q1) et le MOSFET de côté secondaire (Q2) du convertisseur d'alimentation électrique ;
l'unité de commande (124) étant spécifiquement configurée pour :
contrôler la durée pendant laquelle des MOSFET de côté primaire (Q1) du convertisseur d'alimentation électrique sont simultanément dans un état bloqué, qui constitue le temps mort régulé, au cas où le convertisseur d'alimentation électrique comprend également le deuxième MOSFET de côté primaire (Qc), ou contrôler la durée pendant laquelle le premier MOSFET de côté primaire (Q1) et le MOSFET de côté secondaire (Q2) du convertisseur d'alimentation électrique sont simultanément dans un état bloqué, qui constitue le temps mort régulé.

2. Dispositif selon la revendication 1, dans lequel l'unité d'échantillonnage de courant (121) est également configurée pour générer une tension utilisée pour caractériser la valeur du courant échantillonné ;
le régulateur comprend également une unité de génération de tension de référence (122), configurée pour générer une tension de référence, la tension de référence étant une valeur constante ou étant inversement proportionnelle à la tension d'entrée du côté primaire ; et une unité de traitement de signal (123), configurée pour générer le paramètre de temps mort utilisé pour caractériser le temps mort, en fonction de la tension caractérisant la valeur du courant échantillonné et de la tension de référence, le paramètre de temps mort étant une valeur de tension ou une valeur de courant ;
la tension de référence étant inversement proportionnelle à la tension d'entrée, l'unité de génération de tension de référence (122) comprenant :
une puce PWM (21), un MOSFET (22), un condensateur (23), un comparateur (24) et un filtre (25) ;
la puce PWM (21) étant configurée pour générer une première onde PWM ;
le MOSFET (22) étant configuré pour décharger le condensateur (23) en fonction de la première onde PWM ;
le condensateur (23) étant configuré pour être chargé par la tension d'entrée et être déchargé par le MOSFET (22), pour générer une onde en dents de scie ;
le comparateur (24) étant configuré pour comparer l'onde en dents de scie à une tension prédéterminée pour générer une deuxième onde PWM, le rapport cyclique de la deuxième onde PWM étant inversement proportionnel au rapport cyclique de la tension d'entrée ; et
le filtre (25) étant configuré pour filtrer la deuxième onde PWM, pour générer une tension continue qui est inversement proportionnelle à la tension d'entrée, afin de générer la tension de référence en fonction de la tension continue.

3. Dispositif selon la revendication 2, dans lequel
la tension continue qui est générée par le filtre (25) et qui est inversement proportionnelle à la tension d'entrée est prise comme tension de référence ; ou l'unité de génération de tension de référence (122) comprend également : un condensateur ajustable (26), configuré pour effectuer un ajustement sur la tension continue générée par le filtre (25) pour générer la tension de référence.

4. Dispositif selon l'une des revendications 1 à 3, dans lequel l'unité d'échantillonnage de courant (121) est spécifiquement configurée pour échantillonner un courant d'un bus d'entrée du côté primaire, pour permettre d'obtenir la tension caractérisant la valeur du courant échantillonné.

5. Dispositif selon l'une des revendications 1 à 3, dans lequel l'unité d'échantillonnage de courant (121) comprend :
un module d'échantillonnage, configuré pour échantillonner un courant issu du premier MOSFET de côté primaire (Q1) et obtenir une tension correspondante en fonction du courant échantillonné ; et
un module de filtrage, configuré pour filtrer la tension correspondant au courant échantillonné pour obtenir la tension caractérisant la valeur du courant échantillonné.

6. Dispositif selon la revendication 1, dans lequel l'unité de traitement de signal (123) comprend : un additionneur, configuré pour obtenir une somme de la tension caractérisant la valeur du courant échantillonné et de la tension de référence, ou obtenir une différence entre la tension caractérisant la valeur du courant échantillonné et la tension de référence ; et un amplificateur, configuré pour amplifier un signal de tension obtenu après le traitement effectué par l'additionneur pour obtenir le paramètre de temps mort, afin que lorsque le temps mort est régulé en fonction du paramètre de temps mort, le temps mort soit inversement proportionnel au courant échantillonné et que le temps mort soit dans la même proportion directe que celle de la tension d'entrée ;
ou
un amplificateur opérationnel (51), configuré pour amplifier une valeur de tension, qui est une somme de la tension caractérisant la valeur du courant échantillonné et de la tension de référence, ou une différence entre ces deux tensions, afin d'obtenir la valeur de tension amplifiée, la valeur amplifiée étant prise comme paramètre de temps mort, afin que lorsque le temps mort est régulé en fonction du paramètre de temps mort, le temps mort soit inversement proportionnel au courant échantillonné et que le temps mort soit directement proportionnel à la tension d'entrée;

7. Dispositif selon la revendication 6, dans lequel l'unité de traitement de signal (123) comprend également :
un module de commande de vitesse de régulation, configuré pour augmenter une vitesse de génération du paramètre de temps mort lorsque le temps mort augmente ou qu'une charge diminue, et diminuer la vitesse de génération du paramètre de temps mort lorsque le temps mort diminue ou que la charge augmente.

8. Procédé de régulation d'un temps mort, comprenant les étapes consistant à :
échantillonner un courant d'un côté primaire du convertisseur d'alimentation électrique ;
et
réguler un temps mort en fonction d'un paramètre de temps mort, afin que le temps mort soit inversement proportionnel au courant échantillonné et que le temps mort soit directement proportionnel à une tension d'entrée, sur le côté primaire, et, en fonction du temps mort régulé, effectuer une commande de commutation sur des MOSFET de côté primaire du convertisseur d'alimentation électrique, ou sur un MOSFET de côté primaire et un MOSFET de côté secondaire du convertisseur d'alimentation électrique ;
dans lequel l'exécution de la commande de commutation sur des MOSFET de côté primaire du convertisseur d'alimentation électrique, ou sur le MOSFET de côté primaire et le MOSFET de côté secondaire du convertisseur d'alimentation électrique en fonction du temps mort régulé comprend les étapes consistant à :
contrôler la durée pendant laquelle des MOSFET de côté primaire du convertisseur d'alimentation électrique sont simultanément dans un état bloqué, qui constitue le temps mort régulé, ou contrôler la durée pendant laquelle le premier MOSFET et le MOSFET de côté secondaire du convertisseur d'alimentation électrique sont simultanément dans un état bloqué, qui constitue le temps mort régulé.

9. Procédé selon la revendication 8, le procédé comprenant également les étapes consistant à générer une tension utilisée pour caractériser la valeur du courant échantillonné ;
générer une tension de référence, la tension de référence étant une valeur constante ou étant inversement proportionnelle à la tension d'entrée du côté primaire ; et générer un paramètre de temps mort utilisé pour caractériser le temps mort, en fonction de la tension caractérisant la valeur du courant échantillonné et de la tension de référence, le paramètre de temps mort étant une valeur de tension ou une valeur de courant ;
et dans lequel, lorsque la tension de référence est inversement proportionnelle à la tension d'entrée, la génération d'une tension de référence comprend les étapes consistant à :
générer une première onde PWM ;
décharger un condensateur en fonction de la première onde PWM ;
le charger par la tension d'entrée et le décharger par le MOSFET pour générer une onde en dents de scie ;
comparer l'onde triangulaire à une tension prédéterminée pour générer une deuxième onde PWM, le rapport cyclique de la deuxième onde PWM étant inversement proportionnel au rapport cyclique de la tension d'entrée ; et
filtrer la deuxième onde PWM, pour générer une tension continue qui est inversement proportionnelle à la tension d'entrée, afin de générer la tension de référence en fonction de la tension continue.

10. Procédé selon la revendication 9, dans lequel la génération de la tension de référence en fonction de la tension continue comprend les étapes consistant à :
prendre la tension continue comme tension de référence ;
ou
effectuer un ajustement sur la tension continue pour générer la tension de référence.

11. Procédé selon l'une des revendications 8 à 10, dans lequel l'échantillonnage d'un courant d'un côté primaire d'un convertisseur d'alimentation électrique et la génération d'une tension utilisée pour caractériser la valeur du courant échantillonné comprend l'étape consistant à :
échantillonner un courant d'un bus d'entrée du côté primaire pour obtenir la tension caractérisant la valeur du courant échantillonné.

12. Procédé selon l'une des revendications 8 à 10, dans lequel l'échantillonnage d'un courant d'un côté primaire d'un convertisseur d'alimentation électrique et la génération d'une tension utilisée pour caractériser la valeur du courant échantillonné comprend les étapes consistant à :
échantillonner un courant issu du MOSFET de côté primaire et obtenir une tension correspondante en fonction du courant échantillonné ; et
filtrer la tension correspondant au courant échantillonné pour obtenir la tension caractérisant la valeur du courant échantillonné.

13. Procédé selon la revendication 8, dans lequel la génération d'un paramètre de temps mort utilisé pour caractériser le temps mort en fonction de la tension caractérisant la valeur du courant échantillonné et de la tension de référence comprend les étapes consistant à :
à l'aide d'un additionneur, obtenir une somme de la tension caractérisant la valeur du courant échantillonné et de la tension de référence ou obtenir une différence entre la tension caractérisant la valeur du courant échantillonné et la tension de référence ; et,
à l'aide d'un amplificateur, amplifier un signal de tension obtenu après le traitement effectué par l'additionneur pour obtenir le paramètre de temps mort, afin que lorsque le temps mort est régulé en fonction du paramètre de temps mort, le temps mort soit inversement proportionnel au courant échantillonné et que le temps mort soit directement proportionnel à la tension d'entrée ;
ou
à l'aide d'un amplificateur opérationnel, amplifier une valeur de tension, qui est une somme de la tension caractérisant la valeur du courant échantillonné et de la tension de référence, ou une différence entre ces deux tensions, afin d'obtenir la valeur de tension amplifiée, la valeur amplifiée étant prise comme paramètre de temps mort, afin que lorsque le temps mort est régulé en fonction du paramètre de temps mort, le temps mort soit inversement proportionnel au courant échantillonné et que le temps mort soit directement proportionnel à la tension d'entrée.

14. Procédé selon la revendication 8, dans lequel la génération d'un paramètre de temps mort utilisé pour caractériser le temps mort comprend les étapes consistant à :
augmenter une vitesse de génération du paramètre de temps mort lorsque le temps mort augmente ou qu'une charge diminue, et diminuer la vitesse de génération du paramètre de temps mort lorsque le temps mort diminue ou que la charge augmente.
